# EUROPÄISCHE PATENTANMELDUNG

(11) **EP 2 385 488 A1**
(43) Veröffentlichungstag der Anmeldung: **09.11.2011**
(21) Anmeldenummer: 11162370.8
(22) Anmeldetag: 14.04.2011
(51) Int. Cl.: G06Q 10/00

(54) **System zur Verbesserung von Produktionsprozessen**

(30) Priorität: 03.05.2010 DE 102010019063
(71) Anmelder: Heidelberger Druckmaschinen AG, 69115 Heidelberg (DE)
(72) Erfinder: Bittner, Dr., Maik, 69117, Heidelberg (DE); Marschar, Jürgen, 69245, Bammental (DE)

(57) **Zusammenfassung**

Die Erfindung betrifft ein System mit einem Rechner (3, 15, 16) zur Anzeige der Produktionsleistung einer Maschine (6) im Vergleich mit der Produktionsleistung anderer Maschinen (6), wobei die Maschinen (6) über eine Netzwerkverbindung (14) mit einem Rechner (12) zur Durchführung eines Leistungsvergleichs verbunden sind. Die Erfindung zeichnet sich dadurch aus, dass das System so eingerichtet ist, dass zumindest dem Betreiber einer Maschine (6) über die Anzeige des Rechners (3, 15, 16) zur Anzeige der Produktionsleistung Vergleichsdaten des Rechners (12) für den Leistungsvergleich angezeigt werden.

## Beschreibung

Die vorliegende Erfindung betrifft ein System mit einem Rechner zur Anzeige der Produktionsleistung einer Maschine im Vergleich mit der Produktionsleistung anderer Maschinen, wobei die Maschinen über eine Netzwerkverbindung mit einem Rechner zur Durchführung eines Leistungsvergleichs verbunden sind.

Der Wettbewerb zwischen Druckereien ist bei geringen Margen inzwischen sehr hart geworden, so dass jede Druckerei ständig bemüht sein muss, ihren Maschinenpark besonders effizient zu betreiben und effektiv auszulasten. Dabei ist es für den Betreiber von Druckmaschinen besonders interessant zu erfahren, wie er im Vergleich zum Wettbewerb dasteht. Bisher ist es nicht möglich, eine verlässliche Einschätzung der Leistung der eigenen Druckmaschine im Vergleich zu vergleichbaren Druckmaschinen eines Wettbewerbers zu erhalten. Dieses Wissen ist auch bei anderen Maschinenbetreibem von Interesse, welche einen kostenintensiven Maschinenpark betreiben.

Aus der Patentanmeldung US 2007/0192173 A1 geht ein Bedienertrainingsystem für die Fahrer von Baumaschinen hervor, welches die Leistung unterschiedlicher Fahrer von Baumaschinen in einem Betrieb miteinander vergleicht. Dazu sind in den Baumaschinen Sensoren vorhanden, welche die Leistung, wie z. B. die zurückgelegte Wegstrecke und die dabei bewegten Lasten, erfassen und über eine drahtlose Verbindung an einen Rechner zur Durchführung eines Leistungsvergleichs zu übermitteln. Auf diese Art und Weise kann das Management einer Baufirma feststellen, wie die Leistung ihrer Baumaschinenfahrer im Vergleich aussehen. Diese Leistungen der Baumaschinenfahrer können dann auch dazu herangezogen werden, das Gehalt der Baumaschinenfahrer leistungsabhängig zu gestalten und entsprechende Zuzahlungen oder Minderungen zu berechnen. Gleichzeitig bietet das System Baumaschinenfahrern, welche unter dem Durchschnitt liegen, Trainingsmethoden an, um ihre Leistungen zu verbessern. Dieses System hat jedoch den Nachteil, dass der Baumaschinenfahrer selbst nichts von dem Leistungsvergleich mit den anderen Baumaschinenfahrern hat, da er nur erfährt, dass er unter dem Durchschnitt liegt, wenn sein Gehalt gemindert und ihm Trainingsmöglichkeiten angeboten werden, er aber keine qualitative Einschätzung erhält.

Es ist daher Aufgabe der vorliegenden Erfindung, ein System zum Leistungsvergleich für Betreiber von Maschinen zu schaffen, bei dem der Betreiber einer Maschine Informationen über die Leistung vergleichbarer Maschinen beim Wettbewerb erhält.

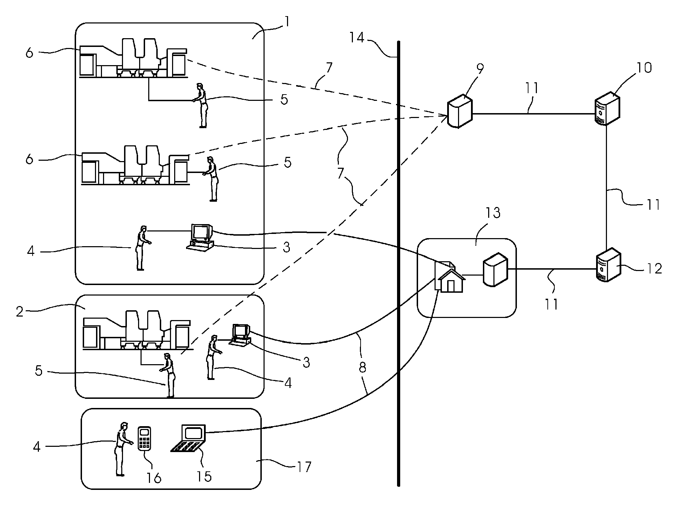

Die Aufgabe wird erfindungsgemäß durch Patentanspruch 1 gelöst. Vorteilhafte Ausgestaltungen der Erfindung sind den Unteransprüchen und der Zeichnung zu entnehmen.

Das erfindungsgemäße System besteht im Wesentlichen aus einem Rechner zur Durchführung eines Leistungsvergleichs, welcher beim Hersteller der Maschine oder bei einem Servicepartner aufgestellt ist. Dieser Leistungsvergleichsrechner ist drahtgebunden oder drahtlos über Datenverbindungen mit den Steuerungsrechnern derjenigen Maschinen verbunden, deren Leistung miteinander verglichen wird. So können sämtliche Maschinen eines Herstellers, welche in den Betrieben der Betreiber stehen, z. B. über eine Internetverbindung mit dem Leistungsvergleichsrechner verbunden sein, so dass die Leistungsvergleichsdaten von diesen Maschinen in den unterschiedlichen Betrieben an den Leistungsvergleichsrechner übertragen werden können. Zudem hat jeder Betreiber der Maschinen die Möglichkeit, über einen Rechner, welcher ebenfalls drahtgebunden oder drahtlos bevorzugt über das Internet mit dem Leistungsvergleichsrechner verbunden ist, sich die Produktionsleistung der vergleichbaren Maschinen auf einer Anzeigevorrichtung seines Rechners anzeigen zu lassen. In diesem Fall kann der Betreiber der Maschine sich unmittelbar einen Überblick über die Leistung vergleichbarer Maschinen bei Betrieben des Wettbewerbs verschaffen und weiß so, wie er seine Produktionsleistung im Vergleich zu dem Wettbewerbern einzuschätzen hat. Das erfindungsgemäße System eignet sich insbesondere dazu, die Leistung von Druckereien mit vergleichbaren Maschinen zu beurteilen und den Betreibern der Druckmaschinen eine Bewertung ihrer Leistung im Vergleich zu Konkurrenzbetrieben anzuzeigen.

In einer ersten Ausgestaltung der Erfindung ist vorgesehen, dass der Rechner für den Leistungsvergleich mit einem Internetportalzugang verbunden ist, der den Betreiber vor dem Zugriff auf die Vergleichsdaten identifiziert und nur bei erfolgreicher Identifizierung eine Anzeige der Vergleichsdaten auf dem Rechner zur Anzeige der Produktionsleistung erfolgt. Dieser Internetportalzugang kann in den Leistungsvergleichsrechner integriert sein, es kann aber auch ein weiterer Rechner als Internetserver vorhanden sein, auf dem der Internetportalzugang installiert ist, und welcher über eine Netzwerkverbindung mit dem Leistungsvergleichsrechner verbunden ist. Der Internetportalzugang besteht im Wesentlichen aus einer Internet Website, auf der sich die Betreiber der Maschinen mit einem Benutzerkennwort und einem entsprechenden Passwort anmelden können. Auf diese Art und Weise wird sichergestellt, dass nur Betreiber von Maschinen Zugriff auf die Vergleichsdaten anderer Maschinen erhalten, welche dazu autorisiert sind. So kann sichergestellt werden, dass nur Betreiber der Maschinen Vergleichsdaten ihrer Produktionsleistung erhalten, welche selbst bereit sind, auch ihre Daten der Produktionsleistung an den Leistungsvergleichsrechner zu senden und an dem System zur Leistungsbewertung teilzunehmen. Dies ist wichtig, da eine effektive Bewertung der Produktionsleistung vergleichbarer Maschinen nur dann erfolgt, wenn entsprechend viele Teilnehmer vorhanden sind. Nur so ist eine aussagekräftige Leistungsbewertung möglich.

In einer weiteren Ausgestaltung der Erfindung ist vorgesehen, dass Leistungsdaten und/oder Betriebsdaten der Maschinen über eine Internetverbindung zur Fernwartung an den Vergleichsrechner übertragen werden. Es ist bereits bekannt, zur Fernwartung die Betriebsdaten und Leistungsdaten einer Druckmaschine in der Maschinensteuerung zu erfassen und bei Wartungsbedarf an einen Wartungsrechner beim Druckmaschinenhersteller oder einem Servicepartner zu übertragen. Diese Daten eignen sich auch hervorragend dazu, die Leistung einer Druckmaschine zu beurteilen, so dass keine zusätzliche Datenerfassung notwendig ist. Aus diesem Grund werden die für Wartungszwecke erfassten Leistungs- und Betriebsdaten der Maschinen auch an den Vergleichsrechner übertragen, so dass dieser auf diese Daten zugreifen und eine Leistungsbewertung durchführen kann. Diese Übertragung lässt sich ganz einfach dadurch realisieren, dass die an einen Rechner zur Fernwartung über das Internet übertragenen Daten über eine Netzwerkverbindung auch an den Vergleichsrechner zur Leistungsbewertung weitergeleitet werden, so dass sie diesem zur Verfügung stehen. Auf diese Art und Weise ist es auch möglich, den Datenumfang für den Vergleichsrechner zu vergrößern, wenn die Datenerfassung für die Fernwartung vergrößert wird. Der große Vorteil liegt darin, dass keine zusätzliche Erfassung der Daten notwendig ist, sondern dass auf die Übertragung der Daten zu Fernwartungszwecken zurückgegriffen werden kann.

Es ist desweiteren vorgesehen, dass in dem Leistungsvergleichsrechner Daten zur Klassifizierung der die Daten sendenden Maschinen abspeicherbar sind und dass der Leistungsvergleichsrechner die Daten der sendenden Maschinen Vergleichsklassen zuordnet. Um die Leistung von Maschinen sinnvoll miteinander vergleichen zu können, ist es wichtig, sowohl die Leistungsdaten der zu vergleichenden Maschinen zu klassifizieren als auch die Daten der auf den Maschinen abgearbeiteten Aufträge wie z. B. Druckaufträge. So werden z. B. die Daten der beteiligten Druckmaschinen daraufhin ausgewertet, in welcher Konfiguration die Druckmaschinen aufgebaut sind, d. h. in welchem Format sie arbeiten, wie viele Druckwerke, Lackwerke sie aufweisen und mit welcher Automatisierungstechnik sie ausgestattet sind. Entsprechend werden auch die auf diesen Maschinen abgearbeiteten Druckaufträge klassifiziert, so dass ein aussagekräftiger Leistungsvergleich in Abhängigkeit der Leistungsklassen der Druckmaschinen und der Leistungsklassen der verarbeiteten Druckaufträge möglich ist. Das System ist weiterhin so eingerichtet, dass neue Vergleichsklassen automatisch erstellt werden, indem die hereinkommenden Daten ständig auf Unterschiede in der Konfiguration der Maschinen und dem Umfang der Druckaufträge ausgewertet werden. Dazu können bekannte neuronale Netze und Bayes Verfahren verwendet werden. Weitere Vergleichsklassen sind unterschiedliche Märkte in unterschiedlichen Ländern oder unterschiedliche Personalbesetzungen an den Maschinen und im Drucksaal.

In einer besonders vorteilhaften Ausgestaltung der Erfindung ist vorgesehen, dass dem Betreiber der Maschine auf dem Rechner zur Anzeige der Produktionsleistung Vorschläge zur Steigerung der Produktivität der Maschine vom Leistungsvergleichsrechner übermittelt werden. Wenn der Betreiber einer Maschine erfährt, dass seine Produktionsleistung im Vergleich zu anderen Betrieben geringer ist, so kann ihm der Leistungsvergleichsrechner Vorschläge zur Steigerung seiner Produktivität machen. Diese Vorschläge beruhen wiederum auf den Leistungsvergleichsdaten der anderen Maschinen. Diese Vorschläge können effizientere Betriebsverfahren der vorhandenen Maschinen des Betreibers beinhalten, es können aber auch Vorschläge in die Richtung gehen, dass der Betreiber neuere effizientere Maschinen anschaffen sollte.

Es ist des Weiteren vorgesehen, dass für unterschiedliche Maschinen eine einheitliche Datenschnittstelle zur Übertragung der Leistungsdaten vorgesehen ist. In diesem Fall ist ein standardisiertes Format für die Datenschnittstelle vorgesehen, so dass Daten unterschiedlicher Maschinen auch von unterschiedlichen Herstellern sinnvoll miteinander im Leistungsvergleichsrechner verglichen werden können. Dazu werden einheitliche Kriterien festgelegt, welche Daten der Maschinensteuerung der einzelnen Maschinen sinnvollerweise bei allen Maschinen erfasst werden können, und ein einheitliches Datenformat, so dass eine Vergleichbarkeit gegeben ist. Daten, welche nur bei wenigen Maschinentypen erfasst werden können, werden so aussortiert oder gegebenenfalls beim Leistungsvergleich weniger schwer gewichtet.

Es ist des Weiteren vorgesehen, dass der Betreiber der Maschine in Abhängigkeit seiner eigenen Maschine und seiner darauf zu fertigenden Aufträge eine Vergleichsklasse für den Leistungsvergleich auswählt und an den Leistungsvergleichsrechner sendet. Auf diese Art und Weise hat der Betreiber der Maschine die Möglichkeit, sich selbst passende Vergleichsklassen für vergleichbare Maschinen und Druckaufträge auszuwählen. Dies ist dann sinnvoll, wenn der Betreiber einer Maschine z. B. beabsichtigt, in neue Maschine investieren zu wollen. In diesem Fall kann der Betreiber die Produktionsleistung von anderen Maschinentypen mit gleichem Auftragsspektrum vergleichen und so feststellen, ob sich eine Investition lohnen würde.

Vorteilhafterweise ist weiterhin vorgesehen, dass der Betreiber den Vorschlag zur Leistungssteigerung über ein Bedienelement an dem Rechner zur Anzeige der Produktionsleistung auswählen kann. Die vom Druckmaschinenhersteller oder seinem Servicepartner unterbreiteten Vorschläge zur Leistungsverbesserung werden dabei vom Leistungsvergleichsrechner an den Betreiber der Maschine übermittelt und auf seinem Rechner zur Anzeige der Produktionsleistung angezeigt. Über Tastatur, Mouse oder Touchscreen kann dann der Betreiber die ihm genehmen Vorschläge in Abhängigkeit der zu erwartenden Kosten für die Realisierung der Vorschläge auswählen und auch gleich automatisch oder über einen Internet Link zum Hersteller zur Leistungssteigerung benötigte Produkte und Dienstleistungen bestellen. Nach der Auswahl der dem Betreiber genehmen Vorschläge und dem Rücksenden der Daten an den Leistungsvergleichsrechner kann dem Betreiber dann wiederum in umgekehrter Richtung eine Bestellbestätigung der angeforderten Produkte und Dienstleistungen zugesandt werden. Auf diese Art und Weise ist eine Automatisierung der Bestellvorgänge zur Steigerung der Produktionsleistung möglich.

Es ist des Weiteren vorgesehen, dass die Daten des Leistungsvergleichs in Abhängigkeit der betrieblichen Funktion des Betreibers in unterschiedlichen Darstellungen anzeigbar sind. In einer Druckerei arbeiten unterschiedliche Leute in unterschiedlichen Positionen. So ist z. B. der Drucker, welcher die Maschine bedient, an anderen Leistungsdaten interessiert als der Manager einer Druckerei, welcher mehr an kaufmännischen Daten interessiert ist. So kann jeder Mitarbeiter der Druckerei seinen eigenen Zugang zu dem Webportal erhalten und dort seine Funktion eingeben, so dass er die für ihn interessanten Daten des Leistungsvergleichs aufbereitet erhält. So wird vermieden, dass der Manager einer Druckerei mit technischen Leistungsdaten überflutet wird, für die er sich nicht interessiert, während der Drucker mit kaufmännischen Daten überflutet wird, die ihn wiederum nicht interessieren.

In einer weiteren Ausgestaltung der Erfindung ist vorgesehen, dass die Vorschläge zur Verbesserung der Produktivität auch eine Umweltbilanz erstellen, bei der z. b. der CO₂ Ausstoß bei der benötigten Maschinenleistung, der Papierverbrauch und der CO₂ Ausstoß bei Leerlauf der Maschine berechnet und angezeigt werden. Auch im Hinblick auf Umweltfreundlichkeit werden dabei Optimierungsvorschläge zur Vermeidung unnötigen CO₂ Ausstoßes durch unnötigen Stromverbrauch gemacht und angezeigt.

Die Erfindung wird nachfolgend anhand einer Figur näher beschrieben und erläutert. Es zeigt:
- Figur: ein erfindungsgemäßes System mit zwei Druckereien, welche mit einem Leistungsvergleichsrechner verbunden sind.

Die Figur zeigt beispielhaft das erfindungsgemäße System zum Leistungsvergleich der Produktivität von Druckmaschinen 6. Dabei werden die Leistungsdaten von Druckmaschinen 6 zweier Druckereien mit einem ersten Drucksaal 1 und einem zweiten Drucksaal 2 miteinander verglichen. Die Druckmaschinen 6 verfügen über einen Maschinenrechner, welcher die Betriebsdaten, Leistungsdaten und weitere Daten in Druckmaschinen 6 erfasst und über eine Internetverbindung 14 sowie eine Firewall 9 an einen Fernwartungsrechner 10 überträgt. Diese Übertragung über das Internet 14 erfolgt dabei über die auch für Fernwartungszwecke vorgesehenen Remote-Service Verbindungen 7. Vom Fernwartungsrechner 10 werden die erfassten Betriebsdaten über ein LAN-Netzwerk 11 an den Leistungsvergleichsrechner 12 übertragen. Die Firewall 9, der Fernwartungsrechner 10 und der Leistungsvergleichsrechner 12 sowie der Server für das Webportal 13 befinden sich beim Druckmaschinenhersteller. In jedem der beiden Drucksäle 1, 2 befindet sich außerdem ein Drucksaal-PC 3, welcher ebenfalls über das Internet 14 mit dem Druckmaschinenhersteller verbunden ist. Allerdings läuft diese Verbindung 8 über das Webportal 13. Dieses Webportal besteht im Wesentlichen aus einem Server, welcher eine Internet Website anzeigt, über die sich Personal in den Drucksälen 1, 2 anmelden kann. Auf Reisen ist es auch möglich, sich im Hotel 17 über ein Smartphone 16 oder einen Laptop 15 am Webportal 13 anzumelden, so dass der Drucksaal Manager 4 jederzeit Zugriff auf Vergleichsdaten hat. Eine Druckerei kann auch über mehrere Drucksäle 1, 2 in unterschiedlichen Ländern verfügen, die der Drucksaalmanager 4 über den Drucksaal-Rechner 3 oder das Smartphone 16 oder den Laptop 15 auf Leistung überwachen kann.

In den Drucksälen 1, 2 arbeiten zum einen die Drucker 5, welche die Druckmaschinen 6 bedienen, und Drucksaalmanager 4, welche insbesondere die Verwaltung der Druckerei führen sowie die Kalkulation der Druckaufträge durchführen. Drucker 5 und Drucksaalmanager 4 verfügen jeweils über eine eigene Benutzeranmeldung und ein eigenes Passwort, unter denen sie sich an dem Drucksaal-PC 3 anmelden können. Nach erfolgreicher Anmeldung über den Rechner des Webportals 13 erhalten Drucksaalmanager 4 und Drucker 5 dann Zugriff auf die Leistungsvergleichsdaten, welche der Leistungsvergleichsrechner 12 zur Verfügung stellt. So können Drucksaalmanager 4 und Drucker 5 im ersten Drucksaal 1 die Produktivität ihrer Druckmaschinen 6 im Vergleich zu der Druckmaschine 6 in der Druckerei des zweiten Drucksaals 2 anzeigen lassen und umgekehrt. Damit wissen beide Druckereien, wo sie im Bezug auf die Produktivität im Vergleich zur Konkurrenz stehen. Weiterhin kann der Vergleichsrechner 12 Vorschläge zur Verbesserung der Produktivität basierend auf produktiveren Druckereien berechnen und über die Verbindung 8 des Webportals 13 in den Drucksaal-PC3 übertragen. Am Drucksaal-PC 3 kann dann der Drucker 5 oder der Drucksaalmanager 4 die Vorschläge annehmen und entsprechende Produkte und Dienstleistungen zur Produktivitätssteigerung bestellen, indem die gewünschten Vorschläge bestätigt werden. Die Bestellung wird dann wiederum über die Verbindung 8 zum Webportal 13 an den Vergleichsrechner 12 übertragen, so dass der Druckmaschinenhersteller dann die gewünschten Vorschläge realisieren kann.

Die Anzeige der Leistungsdaten auf dem Drucksaal-PC 3 erfolgt in Abhängigkeit des Anmelders, d. h. ein Drucksaalmanager 4 kann sich andere Leistungsdaten anzeigen lassen als ein Drucker 5. Auf diese Art und Weise sehen die beteiligten Personen jeweils nur diejenigen Daten, welche für sie relevant sind. Bei der Anzeige der Daten werden zudem Mittelwerte, Bestwerte, Median oder Dezil (obersten 10 %) vergleichbarer Maschinen 6 in einer passenden Vergleichsklasse angezeigt. Die Vorschläge zur Verbesserung können dem Drucker 5 und dem Drucksaalmanager 4 in Form eines Internetlinks auf dem Drucksaal-PC 3 angezeigt werden, den der Benutzer 4, 5 dann anklicken kann und sich so die Vorschläge anzeigen lassen kann. Bei der Auswahl der Vergleichsklassen können gleiche Maschinentypen, gleiche Regionen, gleiche Schwierigkeitsgrade des Druckauftrags ausgewählt werden, so dass das Personal 4, 5 selbst auswählen kann, mit wem es sich vergleichen möchte. Über die identifizierte Anmeldung über das Webportal 13 wird sichergestellt, dass nur befugte Personen 4, 5 Zugriff auf die Daten haben. Die Daten werden außerdem anonym analysiert, so dass das Personal 4, 5 daraus keine Rückschlüsse auf die Herkunft der Vergleichsdaten und damit auf die beteiligten Druckereien schließen kann. Das erfindungsgemäße System hat den großen Vorteil, dass es weitgehend auf den ohnehin für Fernwartungszwecke erhobenen Daten basiert, welche in einem zusätzlichen Leistungsvergleichsrechner 12 ausgewertet werden und als Basis für den Leistungsvergleich dienen.

### Bezugszeichenliste

- 1: erster Drucksaal
- 2: zweiter Drucksaal
- 3: Drucksaal-PC
- 4: Drucksaalmanager
- 5: Drucker
- 6: Druckmaschine mit Maschinenrechner
- 7: Remote-Service Verbindung
- 8: Verbindung über Webportal
- 9: Firewall
- 10: Fernwartungsrechner
- 11: LAN-Netzwerk
- 12: Benchmark-Rechner
- 13: Rechner Webportal
- 14: Internet
- 15: Laptop
- 16: Smartphone
- 17: Hotel

## Patentansprüche

1. System mit einem Rechner (3, 15, 16) zur Anzeige der Produktionsleistung einer Maschine (6) im Vergleich mit der Produktionsleistung anderer Maschinen (6), wobei die Maschinen (6) über eine Datenverbindung (14) mit einem Rechner (12) zur Durchführung eines Leistungsvergleichs verbunden sind,
**dadurch gekennzeichnet,**
**dass** das System so eingerichtet ist, dass zumindest dem Betreiber einer Maschine (6) über die Anzeige des Rechners (3, 15, 16) zur Anzeige der Produktionsleistung Vergleichsdaten des Rechners (12) für den Leistungsvergleich angezeigt werden.

2. System nach Anspruch 1,
**dadurch gekennzeichnet,**
**dass** der Rechner (12) für den Leistungsvergleich mit einem Internetportalzugang (13) verbunden ist, der den Betreiber vor dem Zugriff auf die Vergleichsdaten identifiziert, und dass nur bei erfolgreicher Identifizierung eine Anzeige der Vergleichsdaten auf dem Rechner (3, 15, 16) zur Anzeige der Produktionsleistung erfolgt.

3. System nach Anspruch 1 oder 2,
**dadurch gekennzeichnet,**
**dass** Leistungsdaten und /oder Betriebsdaten der Maschinen (6) über eine Internetverbindung (14) zur Fernwartung an den Vergleichsrechner (12) übertragen werden.

4. System nach Anspruch 3,
**dadurch gekennzeichnet,**
**dass** die Daten nach der Übertragung über das Internet (14) zunächst auf einem Fernwartungsrechner (10) gespeichert werden und von diesem über ein Netzwerk (11) an den Vergleichsrechner (12) weitergeleitet werden.

5. System nach einem der vorhergehenden Ansprüche,
**dadurch gekennzeichnet,**
**dass** in dem Leistungsvergleichsrechner (12) Daten zur Klassifizierung der die Daten sendenden Maschinen (6) abspeicherbar sind und dass der Leistungsvergleichsrechner (12) die Daten der sendenden Maschinen (6) Vergleichsklassen zuordnet.

6. System nach einem der vorhergehenden Ansprüche,
**dadurch gekennzeichnet,**
**dass** dem Betreiber der Maschine (6) auf dem Rechner (3, 15, 16) zur Anzeige der Produktionsleistung Vorschläge oder Angebote zur Steigerung der Produktivität der Maschine (6) vom Leistungsvergleichsrechner (12) übermittelt werden.

7. System nach einem der vorhergehenden Ansprüche,
**dadurch gekennzeichnet,**
**dass** für unterschiedliche Maschinen (6) eine einheitliche Datenschnittstelle zur Übertragung der Leistungsdaten vorgesehen ist.

8. System nach einem der vorhergehenden Ansprüche,
**dadurch gekennzeichnet,**
**dass** der Betreiber der Maschine (6) in Abhängigkeit seiner eigenen Maschine (6) und seiner darauf zu fertigenden Aufträge eine Vergleichsklasse für den Leistungsvergleich auswählt und an den Leistungsvergleichsrechner (12) sendet.

9. System nach Anspruch 8,
**dadurch gekennzeichnet,**
**dass** der Betreiber den Vorschlag zur Leistungssteigerung über ein Bedienelement an dem Rechner (3, 15, 16) zur Anzeige der Produktionsleistung auswählen kann.

10. System nach einem der vorhergehenden Ansprüche,
**dadurch gekennzeichnet,**
**dass** die Daten des Leistungsvergleichs in Abhängigkeit der betrieblichen Funktion des Betreibers in unterschiedlichen Darstellungen anzeigbar sind.
